# EUROPEAN PATENT APPLICATION

(11) **EP 4 790 861 A1**
(43) Date of publication of application: **12.08.2026**
(21) Application number: 23957680.4
(22) Date of filing: 02.11.2023
(51) Int. Cl.: H02J 1/00

(54) **ELECTRIC CIRCUIT AND ELECTRONIC APPARATUS**

(71) Applicant: Nintendo Co., Ltd., Kyoto-shi, Kyoto 601-8501 (JP)
(72) Inventor: ODANAKA, Kohei, Kyoto-shi, Kyoto 601-8501 (JP); MIYAWAKI, Shigekazu, Kyoto-shi, Kyoto 601-8501 (JP)
(74) Representative: Lorenz Seidler Gossel Part. mbB
(86) International application number: PCT/JP2023/039604
(87) International publication number: WO 2025/094354

(57) **Abstract**

The electrical circuit (1, 1', 1") includes a control terminal (2) outputting a control signal, a first rectifier (3a, 3b) through which current supplied from the control terminal passes, a first capacitor (4) storing charge when current is supplied from the control terminal through the first rectifier, a first output (5) a voltage value of which varies in accordance with a charge amount of the first capacitor, a second capacitor (6) storing charge when current is supplied from the control terminal through the first rectifier, a second output (7) a voltage value of which varies in accordance with a charge amount of the second capacitor, a second rectifier (8a, 8b) through which current flowing when the first capacitor and the second capacitor are discharged passes, and a first electronic component (9) which restricts a flow of current from the first rectifier to the second capacitor and a flow of current from the first capacitor to the second rectifier.

## Description

### Technical Field

The present invention relates to an electrical circuit and an electronic device.

### Background Art

Unexamined Patent Publication (Kokai) No. 2020-50061 discloses an image sensor having a plurality of power supplies.

### Summary of Invention

### [TECHNICAL PROBLEM]

Typically, such an image sensor requires switching the plurality of power supplies on and off at different timings in accordance with a predetermined power supply sequence. Each of the plurality of power supplies is provided with a power supply IC, and the ON/OFF of the power supply is controlled via the power supply IC. In this case, in order to switch the plurality of power supplies on and off at different timings, providing the same number of signal lines as the power supply ICs has been considered. Controlling the ON/OFF of electronic components other than the power supplies using a plurality of signal lines has also been considered.

However, since the number of signal lines in a control component is limited, there is a need to use signal lines for more complex control or other applications.

In view of the above problem, an object of the present invention is to switch a plurality of electronic components on and off at different timings using a single signal line from a control component.

### [SOLUTION TO PROBLEM]

The summary of the present disclosure is as follows.
(1) An electrical circuit comprising: a control terminal outputting a control signal; a first rectifier through which current supplied from the control terminal passes; a first capacitor storing charge when current is supplied from the control terminal through the first rectifier; a first output a voltage value of which varies in accordance with a charge amount of the first capacitor; a second capacitor storing charge when current is supplied from the control terminal through the first rectifier; a second output a voltage value of which varies in accordance with a charge amount of the second capacitor; a second rectifier through which current flowing when the first capacitor and the second capacitor are discharged passes; and a first electronic component which restricts a flow of current from the first rectifier to the second capacitor and a flow of current from the first capacitor to the second rectifier.
(2) The electrical circuit described in above (1), wherein the electrical circuit is connected to an image sensor comprising a first power supply and a second power supply, the first output is a first power supply IC switching ON/OFF of the first power supply and the second output is a second power supply IC switching ON/OFF of the second power supply, when current is supplied from the control terminal to the first capacitor and the second capacitor, the first power supply is switched on by the first power supply IC, and thereafter, the second power supply is switched on by the second power supply IC, and when the first capacitor and the second capacitor are discharged, the second power supply is switched off by the second power supply IC, and thereafter, the first power supply is switched off by the first power supply IC.
(3) The electrical circuit described in above (1) or (2), further comprising: a third capacitor storing charge when current is supplied from the control terminal through the first rectifier; a third output a voltage value of which varies in accordance with a charge amount of the third capacitor; and a second electronic component, wherein the second rectifier passes current flowing when the third capacitor is discharged, the first electronic component restricts a flow of current from the first rectifier to the second capacitor and the third capacitor and a flow of current from the first capacitor to the second rectifier, and the second electronic component restricts a flow of current from the first rectifier to the third capacitor and a flow of current from the first capacitor and the second capacitor to the second rectifier.
(4) The electrical circuit described in any one of above (1) to (3), wherein the first rectifier and the second rectifier are diodes.
(5) The electrical circuit described in any one of above (1) to (3), wherein the first rectifier and the second rectifier are transistors.
(6) The electrical circuit described in any one of above (1) to (5), wherein the first electronic component is a resistor.
(7) An electronic device, comprising an electrical circuit, a control component controlling the electrical circuit, and a device connected to the electrical circuit, wherein the electrical circuit comprises: a control terminal outputting a control signal; a first rectifier through which current supplied from the control terminal passes; a first capacitor storing charge when current is supplied from the control terminal through the first rectifier; a first output a voltage value of which varies in accordance with a charge amount of the first capacitor; a second capacitor storing charge when current is supplied from the control terminal through the first rectifier; a second output a voltage value of which varies in accordance with a charge amount of the second capacitor; a second rectifier through which current flowing when the first capacitor and the second capacitor are discharged passes; and a first electronic component which restricts a flow of current from the first rectifier to the second capacitor and a flow of current from the first capacitor to the second rectifier.
(8) An electrical circuit, comprising: a control terminal outputting a control signal; a current supply circuit which is connected to the control terminal and has a first rectifier through which current supplied from the control terminal passes; a first output circuit which is connected to the current supply circuit and has a first capacitor and a first output a voltage value of which varies in accordance with a charge amount of the first capacitor; a first connection circuit having a first electronic component restricting a flow of current; a second output circuit which is connected to the current supply circuit via the first connection circuit and has a second capacitor and a second output a voltage value of which varies in accordance with a charge amount of the second capacitor; and a discharge circuit having a second rectifier through which current flowing when the first capacitor and the second capacitor are discharged passes.
(9) An electronic device comprising an electrical circuit, a control component controlling the electrical circuit, and a device connected to the electrical circuit, wherein the electrical circuit comprises: a control terminal outputting a control signal; a current supply circuit which is connected to the control terminal and has a first rectifier through which current supplied from the control terminal passes; a first output circuit which is connected to the current supply circuit and has a first capacitor and a first output a voltage value of which varies in accordance with a charge amount of the first capacitor; a first connection circuit having a first electronic component restricting a flow of current; a second output circuit which is connected to the current supply circuit via the first connection circuit and has a second capacitor and a second output a voltage value of which varies in accordance with a charge amount of the second capacitor; and a discharge circuit having a second rectifier through which current flowing when the first capacitor and the second capacitor are discharged passes.

According to the present invention, it is possible to switch a plurality of electronic components on and off at different timings using a single signal line from a control component.

### BRIEF DESCRIPTION OF DRAWINGS

FIG. 1 is a view showing an electrical circuit according to a first embodiment of the present invention.
FIG. 2 is a view showing the time change of voltage values of a first power supply IC and a second power supply IC realized by the electrical circuit according to the first embodiment of the present invention.
FIG. 3 is a view showing a power supply sequence realized by the electrical circuit according to the first embodiment of the present invention.
FIG. 4 is a schematic view showing an example of electronic equipment on which the electrical circuit is mounted.
FIG. 5 is a view showing an electrical circuit according to a second embodiment of the present invention.
FIG. 6 is a view showing the time change of voltage values of a first power supply IC and a second power supply IC realized by the electrical circuit according to the second embodiment.
FIG. 7 is a view showing an electrical circuit according to a third embodiment of the present invention.
FIG. 8 is a view showing a power supply sequence realized by the electrical circuit according to the third embodiment of the present invention.

### DESCRIPTION OF EMBODIMENTS

The embodiments of the present invention will be described in detail below with reference to the drawings. Note that in the following description, similar constituent elements have been assigned the same reference signs.

### <First Embodiment>

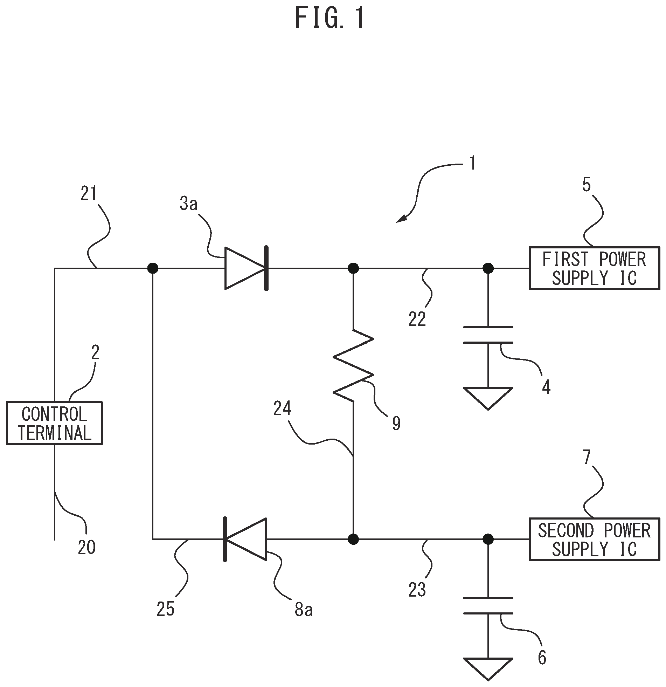

First, the first embodiment of the present invention will be described with reference to FIGS. 1 to 4. FIG. 1 is a view showing an electrical circuit 1 according to the first embodiment of the present invention. In the present embodiment, the electrical circuit 1 is configured to turn two power supplies on and off at different timings. For example, the electrical circuit 1 is connected to an image sensor including a first power supply and a second power supply, and controls the ON/OFF of the first power supply and the second power supply.

As shown in FIG. 1, the electrical circuit 1 includes a control terminal 2, a first diode 3a, a first capacitor 4, a first power supply IC 5, a second capacitor 6, a second power supply IC 7, a second diode 8a, and a first resistor 9. The first diode 3a, the first power supply IC 5, the second power supply IC 7, the second diode 8a, and the first resistor 9 are examples of a first rectifier, a first output, a second output, a second rectifier, and a first electronic component, respectively. Further, in the present embodiment, the electrical circuit 1 is composed of a current supply circuit 21, a first output circuit 22, a second output circuit 23, a first connection circuit 24, and a discharge circuit 25.

The control terminal 2 outputs a voltage control signal. The control terminal 2 is connected to a control component (for example, a CPU (Central Processing Unit) of a System on a Chip (SoC)) via a signal line 20 and is controlled by the control component. In the present embodiment, when the control terminal 2 outputs 1 (High) as a control signal, a predetermined voltage (for example, 1.8V) is applied to the control terminal 2, and current is supplied from the control terminal 2 to the first capacitor 4 and the second capacitor 6. On the other hand, when the control terminal 2 outputs 0 (Low) as a control signal, the voltage of the control terminal 2 drops to 0V, and the first capacitor 4 and the second capacitor 6 are discharged.

The current supply circuit 21 is connected to the control terminal 2 and has a first diode 3a. The first diode 3a passes current in only one direction, and in the example of FIG. 1, allows current to flow from left to right and prohibits current flow from right to left. Thus, the first diode 3a passes current supplied from the control terminal 2 and blocks current supplied to the control terminal 2.

The first output circuit 22 is connected to the current supply circuit 21, and has a first capacitor 4 and a first power supply IC 5 the voltage value of which varies in accordance with the charge amount of the first capacitor 4. The first capacitor 4 stores charge when current is supplied from the control terminal 2 through the first diode 3a. One terminal of the first capacitor 4 is connected to ground, and the other terminal of the first capacitor 4 is connected to the first power supply IC 5. Thus, the terminal voltage of the first capacitor 4 is equal to the voltage value of the first power supply IC 5.

The first power supply IC 5 switches the first power supply on or off in accordance with the voltage value thereof, and is configured as, for example, an enable terminal. In the present embodiment, when the voltage value of the first power supply IC 5 is equal to or greater than a predetermined upper threshold, the signal level of the first power supply IC 5 becomes High, and when the voltage value of the first power supply IC 5 is equal to or less than a predetermined lower threshold that is lower than the upper threshold, the signal level of the first power supply IC 5 becomes Low. The first power supply IC 5 turns on the first power supply when the signal level thereof is High and turns off the first power supply when the signal level thereof is Low.

When charge is stored in the first capacitor 4 due to the current supply from the control terminal 2, the terminal voltage of the first capacitor 4 rises, and the voltage value of the first power supply IC 5 rises in accordance therewith. When the voltage value of the first power supply IC 5 reaches the upper threshold, the signal level of the first power supply IC 5 becomes High, and the first power supply is turned on by the first power supply IC 5.

The second output circuit 23 has a second capacitor 6 and a second power supply IC 7 the voltage value of which varies in accordance with the charge amount of the second capacitor 6. In the electrical circuit 1, the second capacitor 6 is connected in parallel with the first capacitor 4, and the second power supply IC 7 is connected in parallel with the first power supply IC 5.

The second capacitor 6 stores charge when current is supplied from the control terminal 2 through the first diode 3a. One terminal of the second capacitor 6 is connected to ground, and the other terminal is connected to the second power supply IC 7. Thus, the terminal voltage of the second capacitor 6 is equal to the voltage value of the second power supply IC 7. In the present embodiment, the capacitance of the second capacitor 6 is equal to the capacitance of the first capacitor 4.

The second power supply IC 7 switches the second power supply on or off in accordance with the voltage value thereof, and is configured as, for example, an enable terminal. In the present embodiment, when the voltage value of the second power supply IC 7 is equal to or greater than a predetermined upper threshold, the signal level of the second power supply IC 7 becomes High, and when the voltage value of the second power supply IC 7 is equal to or less than a predetermined lower threshold that is lower than the upper threshold, the signal level of the second power supply IC 7 becomes Low. In the present embodiment, the upper and lower thresholds for the second power supply IC 7 are set to the same values as the upper and lower thresholds for the first power supply IC 5. The second power supply IC 7 turns on the second power supply when the signal level thereof is High and turns off the second power supply when the signal level thereof is Low.

When charge is stored in the second capacitor 6 due to the current supply from the control terminal 2, the terminal voltage of the second capacitor 6 rises, and the voltage value of the second power supply IC 7 rises in accordance therewith. When the voltage value of the second power supply IC 7 reaches the upper threshold, the signal level of the second power supply IC 7 becomes High, and the second power supply is turned on by the second power supply IC 7.

In the present embodiment, the first output circuit 22 is directly connected to the current supply circuit 21, and the second output circuit 23 is connected to the current supply circuit 21 via the first connection circuit 24. The first connection circuit 24 connects the branching point between the first diode 3a and the first capacitor 4, and the branching point between the second diode 8a and the second capacitor 6. The first connection circuit 24 has a first resistor 9, and the first resistor 9 is provided between the first diode 3a and the second capacitor 6. Thus, current is supplied to the first capacitor 4 directly from the first diode 3a, and current is supplied to the second capacitor 6 from the first diode 3a via the first resistor 9.

The first resistor 9 restricts the flow of current through the first connection circuit 24, and when current is supplied from the control terminal 2, restricts the flow of current from the first diode 3a to the second capacitor 6. Thus, when current is supplied to the second capacitor 6, the voltage value of the second power supply IC 7 rises in accordance with the time constant of the RC circuit composed of the first resistor 9 and the second capacitor 6. On the other hand, when current is supplied to the first capacitor 4, the voltage value of the first power supply IC 5 rises in synchronization with the control signal of the control terminal 2. As a result, the voltage value of the first power supply IC 5 reaches the upper threshold before the voltage value of the second power supply IC 7. Accordingly, when current is supplied from the control terminal 2 to the first capacitor 4 and the second capacitor 6, the first power supply is turned on by the first power supply IC 5, and the second power supply is then turned on by the second power supply IC 7.

The discharge circuit 25 connects the current supply circuit 21 upstream (control terminal side) of the first diode 3a and the second output circuit 23, and has a second diode 8a. In the electrical circuit 1, the second diode 8a is connected in parallel with the first diode 3a.

The second diode 8a passes current in only one direction, and in the example of FIG. 1, allows current to flow from right to left and prohibits current flow from left to right. Thus, the second diode 8a passes current supplied to the control terminal 2, i.e., the current which flows when the first capacitor 4 and second capacitor 6 are discharged, and blocks the current supplied from the control terminal 2.

When charge is released from the first capacitor 4 due to discharge thereof, the terminal voltage of the first capacitor 4 decreases, and the voltage value of the first power supply IC 5 decreases in accordance therewith. When the voltage value of the first power supply IC 5 reaches the lower threshold, the signal level of the first power supply IC 5 becomes Low, and the first power supply is turned off by the first power supply IC 5.

Likewise, when charge is released from the second capacitor 6 due to discharge thereof, the terminal voltage of the second capacitor 6 decreases, and the voltage value of the second power supply IC 7 decreases in accordance therewith. When the voltage value of the second power supply IC 7 reaches the lower threshold, the signal level of the second power supply IC 7 becomes Low, and the second power supply is turned off by the second power supply IC 7.

In the present embodiment, the first output circuit 22 is connected to the discharge circuit 25 via the first connection circuit 24, and the second output circuit 23 is directly connected to the discharge circuit 25. The first connection circuit 24 has the first resistor 9, and the first resistor 9 is provided between the first capacitor 4 and the second diode 8a. Thus, the current supplied from the first capacitor 4 is supplied to the second diode 8a via the first resistor 9, and the current supplied from the second capacitor 6 is supplied to the second diode 8a without passing through the first resistor 9. The current supplied from the first capacitor 4 and the second capacitor 6 flows to the ground of the control component through the discharge circuit 25, the current supply circuit 21, the control terminal 2, and the signal line 20.

The first resistor 9 restricts the flow of current from the first capacitor 4 to the second diode 8a when the first capacitor 4 is discharged. Thus, the voltage value of the first power supply IC 5 decreases in accordance with the time constant of the RC circuit composed of the first resistor 9 and the first capacitor 4 when the first capacitor 4 is discharged. On the other hand, the voltage value of the second power supply IC 7 decreases in synchronization with the control signal of the control terminal 2 when the second capacitor 6 is discharged. As a result, the voltage value of the second power supply IC 7 reaches the lower threshold before the voltage value of the first power supply IC 5. Accordingly, when the first capacitor 4 and the second capacitor 6 are discharged, the second power supply is turned off by the second power supply IC 7, and the first power supply is then turned off by the first power supply IC 5.

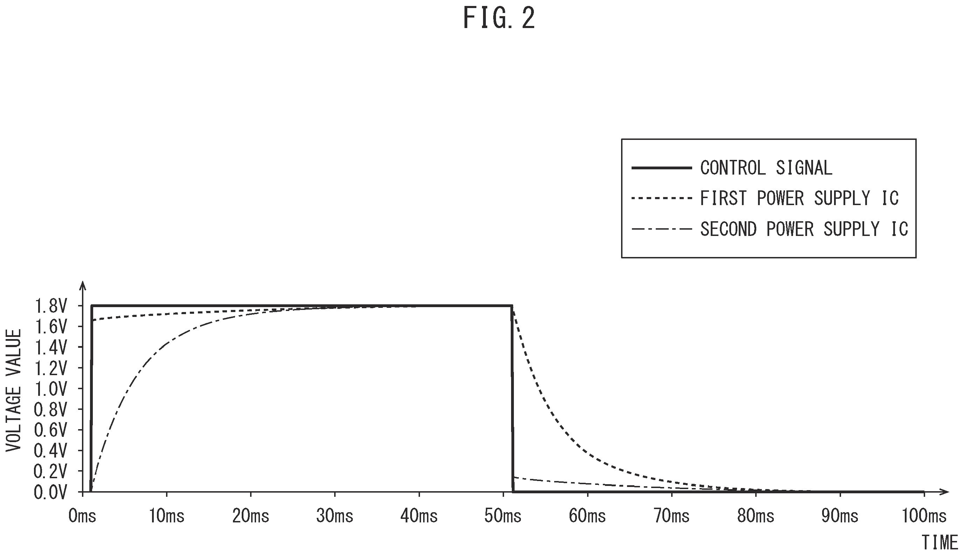

FIG. 2 is a view showing the time change of the voltage values of the first power supply IC 5 and the second power supply IC 7 realized by the electrical circuit 1 according to the first embodiment of the present invention. In FIG. 2, the solid line represents the voltage value of the control signal of the control terminal 2, the dashed line represents the voltage value of the first power supply IC 5, and the dash-dotted line represents the voltage value of the second power supply IC 7.

As shown in FIG. 2, when a voltage value of 1.8V is output as a control signal, the voltage values of the first power supply IC 5 and the second power supply IC 7 begin to rise. The voltage value of the first power supply IC 5 rises from 0V to approximately 1.6V in synchronization with the control signal, and then gradually rises to 1.8V. The time change in the voltage value from approximately 1.6V to 1.8V is due to the voltage difference generated in the first diode 3a. On the other hand, the voltage value of the second power supply IC 7 rises gradually from 0V to 1.8V in accordance with the time constant of the RC circuit composed of the first resistor 9 and the second capacitor 6. Accordingly, the voltage value of the second power supply IC 7 is delayed in time relative to the voltage value of the first power supply IC 5. In the present embodiment, the upper threshold at which the first power supply and the second power supply are turned on is set to a value in the voltage range in which the voltage value of the first power supply IC 5 synchronizes with the control signal, for example, a value from 0.9V to 1.6V. Thus, the voltage value of the first power supply IC 5 reaches the upper threshold before the voltage value of the second power supply IC 7, and the first power supply is turned on before the second power supply.

Subsequently, when a voltage value of 0V is output as a control signal while the first power supply and second power supply are on, the voltage values of the first power supply IC 5 and second power supply IC 7 begin to decrease. The voltage value of the second power supply IC 7 decreases from 1.8V to approximately 0.2V in synchronization with the control signal, and then gradually decreases to 0V. The time change in the voltage value from approximately 0.2V to 0V is due to the voltage difference generated in the second diode 8a. On the other hand, the voltage value of the first power supply IC 5 gradually decreases from 1.8V to 0V in accordance with the time constant of the RC circuit composed of the first resistor 9 and the first capacitor 4. Accordingly, the voltage value of the first power supply IC 5 is delayed in time relative to the voltage value of the second power supply IC 7. In the present embodiment, the lower threshold at which the first power supply and second power supply are turned off is set to a value in the voltage range in which the voltage value of the second power supply IC 7 synchronizes with the control signal, for example, a value from 0V to 0.4V. Thus, the voltage value of the second power supply IC 7 reaches the lower threshold before the voltage value of the first power supply IC 5, and the second power supply is turned off before the first power supply.

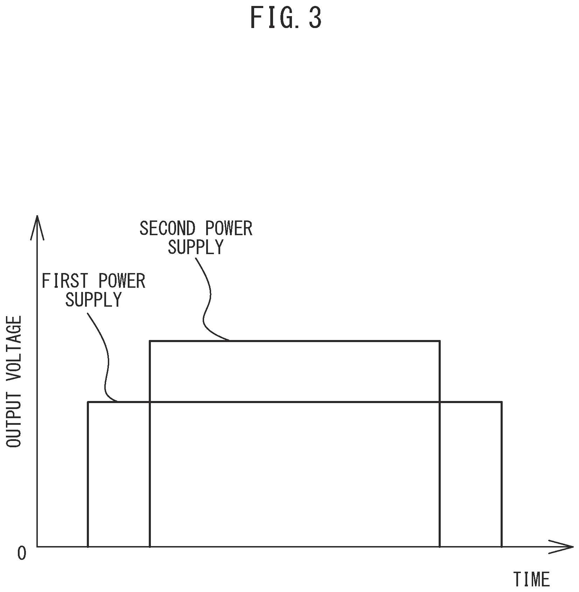

Accordingly, according to the electrical circuit 1, the power supply sequence shown in FIG. 3 is realized. For example, the first power supply is an interface power supply (DOVDD) of the image sensor, and the second power supply is a digital power supply (DVDD) of the image sensor. In this power supply sequence, the first power supply is turned on first, the second power supply is then turned on, and thereafter, the second power supply is turned off first, and the first power supply is then turned off. In other words, for the two power supplies, the order in which the power supplies are turned on and the order in which they are turned off are reversed. Thus, the electrical circuit 1 enables the two electronic components (first power supply and second power supply) to be turned on and off at different timings using the single signal line 20 from the control component.

Note that, instead of the first power supply IC 5 and the second power supply IC 7, other ICs, such as other switching components for turning electronic components other than power supplies on and off, may be used as the first output and second output. Furthermore, instead of the first resistor 9, a first inductor that restricts the flow of current may be used. Further, the discharge circuit 25 may be directly connected to ground or the like provided in the electrical circuit 1.

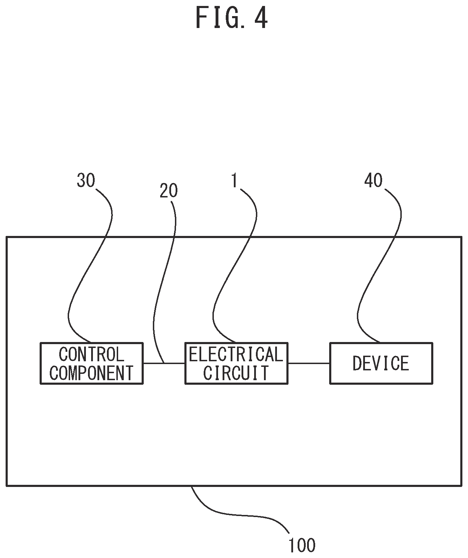

The electrical circuit 1 described above is mounted on, for example, an electronic device. FIG. 4 is a schematic view showing an electronic device 100 on which the electrical circuit 1 is mounted. The electronic device 100 is, for example, a portable electronic device such as a portable game console, a tablet terminal, a smartphone, a mobile monitor, an e-book reader, etc.

As shown in FIG. 4, the electronic device 100 includes an electrical circuit 1, a control component 30 controlling the electrical circuit 1, and a device 40 connected to the electrical circuit 1. The control component 30 is, for example, the CPU of an SoC, and controls the electrical circuit 1 via the signal line 20. The device 40 is, for example, an image sensor, an infrared sensor, etc., and includes a plurality of electronic components (for example, a plurality of power supplies) which are turned on and off by the electrical circuit 1.

### <Second Embodiment>

The electrical circuit according to the second embodiment is basically identical to the electrical circuit according to the first embodiment, except for the points described below. Thus, the second embodiment of the present invention will be described below focusing on the differences from the first embodiment.

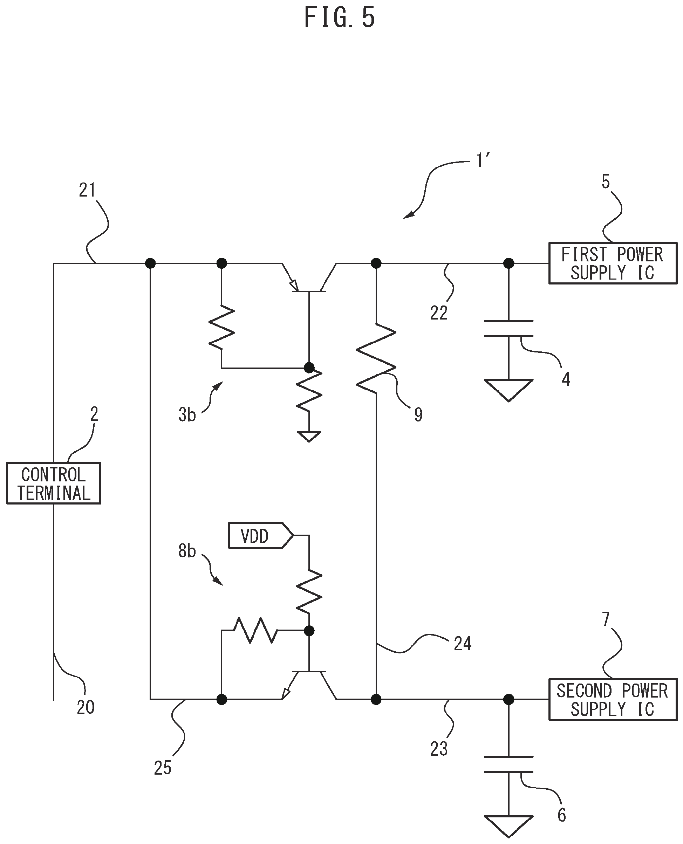

FIG. 5 shows an electrical circuit 1' according to a second embodiment of the present invention. In the second embodiment, the electrical circuit 1' includes a first transistor 3b in place of the first diode 3a as a first rectifier through which current supplied from the control terminal 2 passes. In the same manner as the first diode 3a, the first transistor 3b passes current in only one direction, and in the example of FIG. 5, allows current to flow from left to right and prohibits current flow from right to left. Thus, the first transistor 3b passes the current supplied from the control terminal 2 and blocks the current supplied to the control terminal 2.

Further, in the second embodiment, the electrical circuit 1' includes a second transistor 8b in place of the second diode 8a as a second rectifier through which current flowing when the first capacitor 4 and the second capacitor 6 are discharged passes. In the electrical circuit 1', the second transistor 8b is connected in parallel with the first transistor 3b. The second transistor 8b passes current in only one direction, and in the example of FIG. 5, allows current to flow from right to left and prohibits current flow from left to right. Thus, the second transistor 8b passes current supplied to the control terminal 2, i.e., the current which flows when the first capacitor 4 and second capacitor 6 are discharged, and blocks current supplied from the control terminal 2.

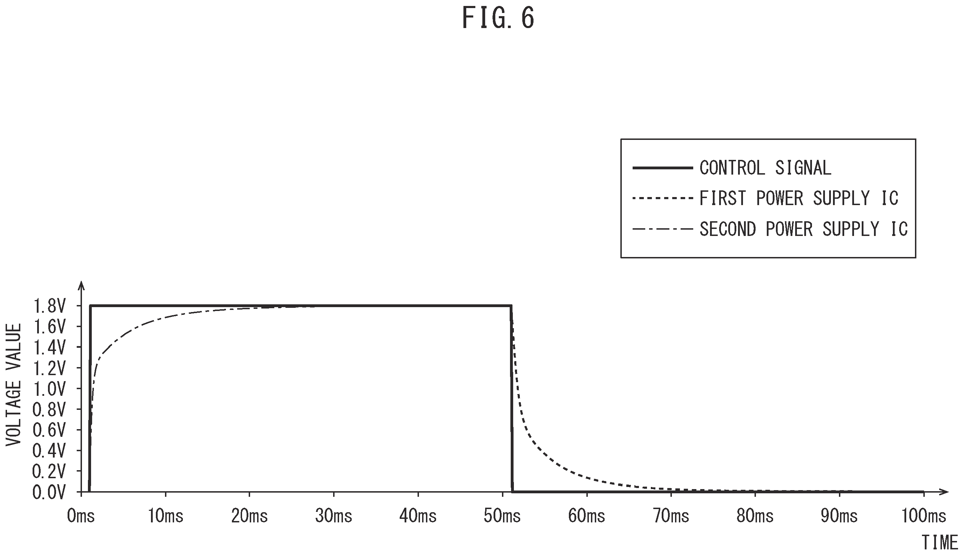

FIG. 6 shows the time change of the voltage values of the first power supply IC 5 and the second power supply IC 7 realized by the electrical circuit 1' according to the second embodiment of the present invention. In FIG. 6, the solid line represents the voltage value of the control signal of the control terminal 2, the dashed line represents the voltage value of the first power supply IC 5, and the dash-dotted line represents the voltage value of the second power supply IC 7.

As shown in FIG. 6, when a voltage value of 1.8V is output as a control signal, the voltage values of the first power supply IC 5 and the second power supply IC 7 begin to rise. Unlike the first embodiment, the voltage value of the first power supply IC 5 rises from 0V to 1.8V in synchronization with the control signal. In FIG. 6, the solid line representing the voltage value of the control signal and the dashed line representing the voltage value of the first power supply IC 5 overlap.

Accordingly, when the first rectifier is configures as a transistor, unlike when the first rectifier is configured as a diode, there are no regions in which the voltage value of the first power supply IC 5 rises gradually. Thus, even if the upper thresholds for the first power supply IC 5 and the second power supply IC 7 are set to a value (for example, 1.7V) close to the voltage of the control terminal 2 (1.8V in the present embodiment), it is possible to reliably create a difference between the timing when the voltage value of the first power supply IC 5 reaches the upper threshold and the timing when the voltage value of the second power supply IC 7 reaches the upper threshold. On the other hand, when the first rectifier is configured as a diode, the electrical circuit can be realized at a lower cost as compared to the case in which the first rectifier is configured as a transistor.

Subsequently, when a voltage value of 0V is output as a control signal while the first power supply and second power supply are on, the voltage values of the first power supply IC 5 and second power supply IC 7 begin to decrease. Unlike the first embodiment, the voltage value of the second power supply IC 7 decreases from 1.8V to 0V in synchronization with the control signal. In FIG. 6, the solid line representing the voltage value of the control signal and the dash-dotted line representing the voltage value of the second power supply IC 7 overlap.

Accordingly, when the second rectifier is configures as a transistor, unlike when the second rectifier is configured as a diode, there are no regions in which the voltage value of the second power supply IC 7 decreases gradually. Thus, even if the lower thresholds for the first power supply IC 5 and the second power supply IC 7 are set to a value (for example, 0.1V) close to the voltage of the control terminal 2 (0V in the present embodiment), it is possible to reliably create a difference between the timing when the voltage value of the second power supply IC 7 reaches the lower threshold and the timing when the voltage value of the first power supply IC 5 reaches the lower threshold. On the other hand, when the second rectifier is configured as a diode, the electrical circuit can be realized at a lower cost as compared to the case in which the second rectifier is configures as a transistor.

### <Third Embodiment>

The electrical circuit according to the third embodiment is basically identical to the electrical circuit according to the first embodiment, except for the points described below. Thus, the third embodiment of the present invention will be described below focusing on the differences from the first embodiment.

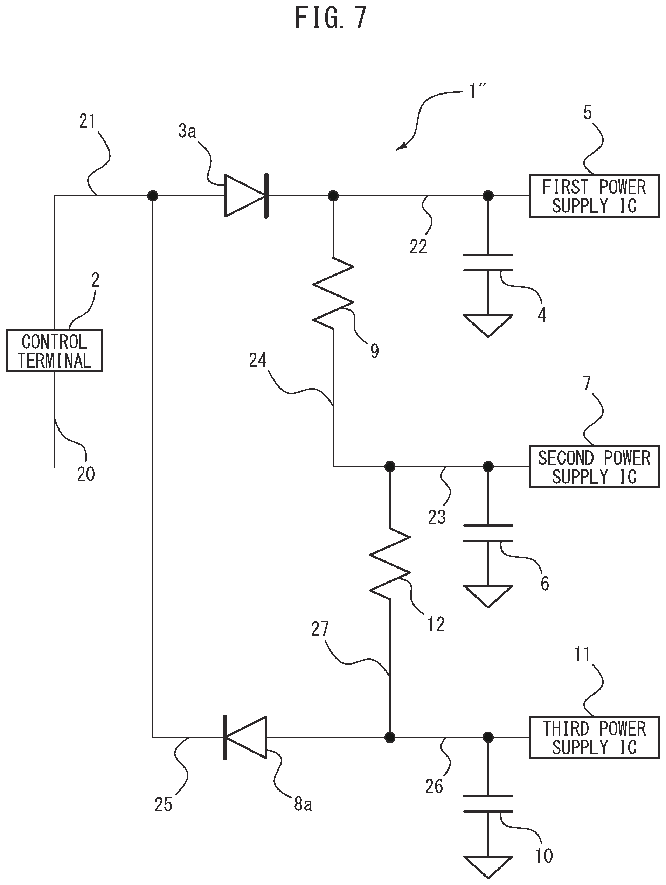

FIG. 7 shows an electrical circuit 1" according to the third embodiment of the present invention. The electrical circuit 1" is configured to turn three power supplies on and off at different timings.

In the third embodiment, the electrical circuit 1'' includes, in addition to the electronic components shown in FIG. 1, a third capacitor 10, a third power supply IC 11, and a second resistor 12. The third power supply IC 11 and the second resistor 12 are examples of a third output and a second electronic component, respectively. Furthermore, in the third embodiment, the electrical circuit 1'' is composed of a current supply circuit 21, a first output circuit 22, a second output circuit 23, a first connection circuit 24, a discharge circuit 25, a third output circuit 26, and a second connection circuit 27.

The third output circuit 26 has a third capacitor 10 and a third power supply IC 11 the voltage value of which varies in accordance with the charge amount of the third capacitor 10. In the electrical circuit 1", the third capacitor 10 is connected in parallel to the first capacitor 4 and the second capacitor 6, and the third power supply IC 11 is connected in parallel to the first power supply IC 5 and the second power supply IC 7.

The third capacitor 10 stores charge when current is supplied from the control terminal 2 through the first diode 3a. One terminal of the third capacitor 10 is connected to ground, and the other terminal is connected to the third power supply IC 11. Thus, the terminal voltage of the third capacitor 10 is equal to the voltage value of the third power supply IC 11.

The third power supply IC 11 switches the third power supply on or off in accordance with the voltage value thereof, and is configured as, for example, an enable terminal. In the present embodiment, when the voltage value of the third power supply IC 11 is equal to or greater than a predetermined upper threshold, the signal level of the third power supply IC 11 becomes High, and when the voltage value of the third power supply IC 11 is equal to or less than a predetermined lower threshold that is lower than the upper threshold, the signal level of the third power supply IC 11 becomes Low. In the present embodiment, the upper and lower thresholds for the third power supply IC 11 are set to the same values as the upper and lower thresholds for the first power supply IC 5 and second power supply IC 7. The third power supply IC 11 turns on the third power supply when the signal level thereof is High and turns off the third power supply when the signal level thereof is Low.

When charge is stored in the third capacitor 10 due to the current supplied from the control terminal 2, the terminal voltage of the third capacitor 10 rises, and the voltage value of the third power supply IC 11 rises in accordance therewith. When the voltage value of the third power supply IC 11 reaches the upper threshold, the signal level of the third power supply IC 11 becomes High, and the third power supply is turned on by the third power supply IC 11.

In the electrical circuit 1", the first output circuit 22 is directly connected to the current supply circuit 21, the second output circuit 23 is connected to the current supply circuit 21 via the first connection circuit 24, and the third output circuit 26 is connected to the current supply circuit 21 via the second connection circuit 27 and the first connection circuit 24. The second connection circuit 27 connects the branching point between the first resistor 9 and the second capacitor 6, and the branching point between the second diode 8a and the third capacitor 10. The second connection circuit 27 has the second resistor 12, and the first resistor 9 and the second resistor 12 are provided between the first diode 3a and the third capacitor 10. Thus, current is supplied to the third capacitor 10 from the first diode 3a via the first resistor 9 and the second resistor 12.

The first resistor 9 restricts the flow of current through the first connection circuit 24, and when current is supplied from the control terminal 2, restricts the flow of current from the first diode 3a to the second capacitor 6 and the third capacitor 10. The second resistor 12 restricts the flow of current through the second connection circuit 27, and when current is supplied from the control terminal 2, restricts the flow of current from the first diode 3a to the third capacitor 10. As a result, when current is supplied to the third capacitor 10, the voltage value of the third power supply IC 11 rises in accordance with the time constant of the RC circuit composed of the first resistor 9, the second resistor 12, and the third capacitor 10. On the other hand, when current is supplied to the second capacitor 6, the voltage value of the second power supply IC 7 rises in accordance with the time constant of the RC circuit composed of the first resistor 9 and the second capacitor 6.

The first resistor 9, the second resistor 12, the second capacitor 6, and the third capacitor 10 are designed such that the time constant of the RC circuit composed of the first resistor 9, the second resistor 12, and the third capacitor 10 is greater than the time constant of the RC circuit composed of the first resistor 9 and the second capacitor 6. For example, the capacitance of the second capacitor 6 is made equal to the capacitance of the third capacitor 10. Furthermore, the voltage value of the first power supply IC 5 rises in synchronization with the control signal of the control terminal 2 when current is supplied to the first capacitor 4. Thus, the rate at which the voltage value rises is slower in the order of the first power supply IC 5, the second power supply IC 7, and the third power supply IC 11. As a result, the voltage value reaches the upper threshold in the order of the first power supply IC 5, the second power supply IC 7, and the third power supply IC 11. Specifically, when a voltage is applied to the control terminal 2, the first power supply is turned on by the first power supply IC 5, the second power supply is then turned on by the second power supply IC 7, and finally, the third power supply is turned on by the third power supply IC 11.

The discharge circuit 25 connects the current supply circuit 21 upstream (control terminal side) of the first diode 3a and the third output circuit 26, and has the second diode 8a. The second diode 8a passes current in only one direction, and in the example of FIG. 7, allows current to flow from right to left and prohibits current flow from left to right. Thus, the second diode 8a passes current supplied to the control terminal 2, i.e., the current which flows when the first capacitor 4, the second capacitor 6, and the third capacitor 10 are discharged, and blocks the current supplied from the control terminal 2.

When charge is released from the third capacitor 10 due to discharge thereof, the terminal voltage of the third capacitor 10 decreases, and the voltage value of the third power supply IC 11 decreases in accordance therewith. When the voltage value of the third power supply IC 11 reaches the lower threshold, the signal level of the third power supply IC 11 becomes Low, and the third power supply is turned off by the third power supply IC 11.

In the present embodiment, the first output circuit 22 is connected to the discharge circuit 25 via the first connection circuit 24 and the second connection circuit 27, the second output circuit 23 is connected to the discharge circuit 25 via the second connection circuit 27, and the third output circuit 26 is directly connected to the discharge circuit 25. The second connection circuit 27 has the second resistor 12, the first resistor 9 and the second resistor 12 are provided between the first capacitor 4 and the second diode 8a, and the second resistor 12 is provided between the second capacitor 6 and the second diode 8a. Thus, the current supplied from the first capacitor 4 is supplied to the second diode 8a via the first resistor 9 and the second resistor 12, the current supplied from the second capacitor 6 is supplied to the second diode 8a via the second resistor 12, and the current supplied from the third capacitor 10 is supplied to the second diode 8a without passing through the first resistor 9 and the second resistor 12. The current supplied from the first capacitor 4, the second capacitor 6, and the third capacitor 10 flows to the ground of the control component through the discharge circuit 25, the current supply circuit 21, the control terminal 2, and the signal line 20.

The first resistor 9 and the second resistor 12 restrict the flow of current from the first capacitor 4 to the second diode 8a when the first capacitor 4 is discharged. The second resistor 12 restricts the flow of current from the second capacitor 6 to the second diode 8a when the second capacitor 6 is discharged. Thus, when the first capacitor 4 is discharged, the voltage value of the first power supply IC 5 decreases in accordance with the time constant of the RC circuit composed of the first resistor 9, the second resistor 12, and the first capacitor 4. On the other hand, when the second capacitor 6 is discharged, the voltage value of the second power supply IC 7 decreases in accordance with the time constant of the RC circuit composed of the second resistor 12 and the second capacitor 6.

The first resistor 9, the second resistor 12, the first capacitor 4, and the second capacitor 6 are designed such that the time constant of the RC circuit composed of the first resistor 9, the second resistor 12, and the first capacitor 4 is greater than the time constant of the RC circuit composed of the second resistor 12 and the second capacitor 6. For example, the capacitance of the first capacitor 4 is made equal to the capacitance of the second capacitor 6. Furthermore, the voltage value of the third power supply IC 11 decreases in synchronization with the control signal of the control terminal 2 when the third capacitor 10 is discharged. Thus, the rate at which the voltage value decreases is slower in the order of the third power supply IC 11, the second power supply IC 7, and the first power supply IC 5. As a result, the voltage value reaches the lower threshold in the order of the third power supply IC 11, the second power supply IC 7, and the first power supply IC 5. Specifically, when the voltage of the control terminal 2 is set to 0V, the third power supply is turned off by the third power supply IC 11, the second power supply is then turned off by the second power supply IC 7, and finally, the first power supply is turned off by the first power supply IC 5.

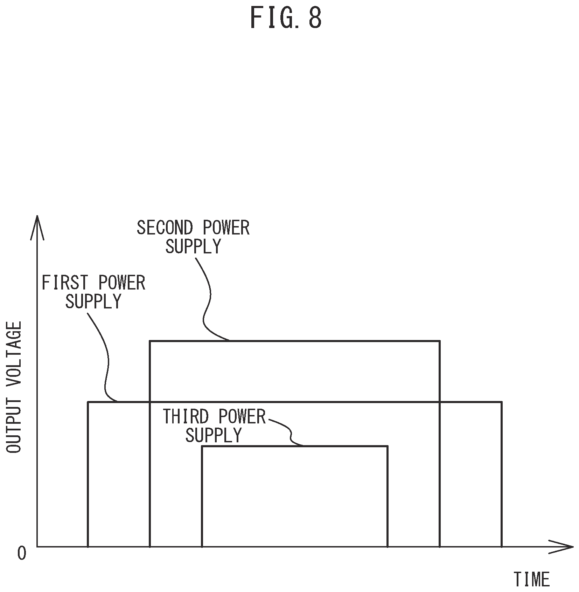

Accordingly, according to the electrical circuit 1, the power supply sequence shown in FIG. 8 is realized. In this power supply sequence, the power supplies are turned on in the order of the first power supply, the second power supply, and the third power supply, and then turned off in the order of the third power supply, the second power supply, and the first power supply. In other words, for the three power supplies, the order in which the power supplies are turned on and the order in which they are turned off are reversed. Thus, the electrical circuit 1" enables the three electronic components (the first power supply, the second power supply, and the third power supply) to be turned on and off at different timings using the single signal line 20 from the control component.

Note that, instead of the first power supply IC 5, the second power supply IC 7, and the third power supply IC 11, other ICs, such as other switching components for turning electronic components other than power supplies on and off, may be used as the first output, the second output, and the third output. Further, instead of the first resistor 9, a first inductor that restricts the flow of current may be used, and instead of the second resistor 12, a second inductor that restricts the flow of current may be used. The discharge circuit 25 may be directly connected to ground or the like provided in the electrical circuit 1".

### <Other Embodiments>

Though preferred embodiments of the present invention have been described above, the present invention is not limited to these embodiments, and various modifications and changes can be made.

For example, the number of outputs of the electrical circuit may be four or more. In this case, in the same manner as the third embodiment, the order in which the electronic components such as power supplies are turned on and the order in which such electronic components are turned off can be reversed by adding capacitors connected to the outputs and electronic components restricting the flow of current, depending on the number of outputs.

Furthermore, the embodiments described above can be implemented in any combination. For example, in the electrical circuit 1'' shown in FIG. 7, the first transistor 3b and the second transistor 8b may be used in place of the first diode 3a and the second diode 8a, in the same manner as the second embodiment. Furthermore, in the electrical circuits 1, 1'', one of the first rectifier and the second rectifier may be a diode, and the other of the first rectifier and the second rectifier may be a transistor.

### DESCRIPTION OF REFERENCE SIGNS

- 1, 1', 1": electrical circuit
- 2: control terminal
- 3a first: diode
- 3b first: transistor
- 4 first: capacitor
- 5 first: power supply IC
- 6: second capacitor
- 7: second power supply IC
- 8a: second diode
- 8b: second transistor
- 9: first resistance
- 30: control component
- 40: device
- 100: electronic device

## Claims

1. An electrical circuit comprising:
a control terminal outputting a control signal;
a first rectifier through which current supplied from the control terminal passes;
a first capacitor storing charge when current is supplied from the control terminal through the first rectifier;
a first output a voltage value of which varies in accordance with a charge amount of the first capacitor;
a second capacitor storing charge when current is supplied from the control terminal through the first rectifier;
a second output a voltage value of which varies in accordance with a charge amount of the second capacitor;
a second rectifier through which current flowing when the first capacitor and the second capacitor are discharged passes; and
a first electronic component which restricts a flow of current from the first rectifier to the second capacitor and a flow of current from the first capacitor to the second rectifier.

2. The electrical circuit according to claim 1, wherein the electrical circuit is connected to an image sensor comprising a first power supply and a second power supply,
the first output is a first power supply IC switching ON/OFF of the first power supply and the second output is a second power supply IC switching ON/OFF of the second power supply,
when current is supplied from the control terminal to the first capacitor and the second capacitor, the first power supply is switched on by the first power supply IC, and thereafter, the second power supply is switched on by the second power supply IC, and
when the first capacitor and the second capacitor are discharged, the second power supply is switched off by the second power supply IC, and thereafter, the first power supply is switched off by the first power supply IC.

3. The electrical circuit according to claim 1 or 2, further comprising:
a third capacitor storing charge when current is supplied from the control terminal through the first rectifier;
a third output a voltage value of which varies in accordance with a charge amount of the third capacitor; and
a second electronic component, wherein
the second rectifier passes current flowing when the third capacitor is discharged,
the first electronic component restricts a flow of current from the first rectifier to the second capacitor and the third capacitor and a flow of current from the first capacitor to the second rectifier, and
the second electronic component restricts a flow of current from the first rectifier to the third capacitor and a flow of current from the first capacitor and the second capacitor to the second rectifier.

4. The electrical circuit according to any one of claims 1 to 3, wherein the first rectifier and the second rectifier are diodes.

5. The electrical circuit according to any one of claims 1 to 3, wherein the first rectifier and the second rectifier are transistors.

6. The electrical circuit according to any one of claims 1 to 5, wherein the first electronic component is a resistor.

7. An electronic device, comprising an electrical circuit, a control component controlling the electrical circuit, and a device connected to the electrical circuit, wherein
the electrical circuit comprises:
a control terminal outputting a control signal;
a first rectifier through which current supplied from the control terminal passes;
a first capacitor storing charge when current is supplied from the control terminal through the first rectifier;
a first output a voltage value of which varies in accordance with a charge amount of the first capacitor;
a second capacitor storing charge when current is supplied from the control terminal through the first rectifier;
a second output a voltage value of which varies in accordance with a charge amount of the second capacitor;
a second rectifier through which current flowing when the first capacitor and the second capacitor are discharged passes; and
a first electronic component which restricts a flow of current from the first rectifier to the second capacitor and a flow of current from the first capacitor to the second rectifier.

8. An electrical circuit, comprising:
a control terminal outputting a control signal;
a current supply circuit which is connected to the control terminal and has a first rectifier through which current supplied from the control terminal passes;
a first output circuit which is connected to the current supply circuit and has a first capacitor and a first output a voltage value of which varies in accordance with a charge amount of the first capacitor;
a first connection circuit having a first electronic component restricting a flow of current;
a second output circuit which is connected to the current supply circuit via the first connection circuit and has a second capacitor and a second output a voltage value of which varies in accordance with a charge amount of the second capacitor; and
a discharge circuit having a second rectifier through which current flowing when the first capacitor and the second capacitor are discharged passes.

9. An electronic device comprising an electrical circuit, a control component controlling the electrical circuit, and a device connected to the electrical circuit, wherein
the electrical circuit comprises:
a control terminal outputting a control signal;
a current supply circuit which is connected to the control terminal and has a first rectifier through which current supplied from the control terminal passes;
a first output circuit which is connected to the current supply circuit and has a first capacitor and a first output a voltage value of which varies in accordance with a charge amount of the first capacitor;
a first connection circuit having a first electronic component restricting a flow of current;
a second output circuit which is connected to the current supply circuit via the first connection circuit and has a second capacitor and a second output a voltage value of which varies in accordance with a charge amount of the second capacitor; and
a discharge circuit having a second rectifier through which current flowing when the first capacitor and the second capacitor are discharged passes.
